# EUROPEAN PATENT APPLICATION

(11) **EP 2 033 732 A1**
(43) Date of publication of application: **11.03.2009**
(21) Application number: 07115837.2
(22) Date of filing: 06.09.2007
(51) Int. Cl.: B23K 9/32

(54) **A method and device for filtering the intense dazzling light generated by an electric welding apparatus**

(71) Applicant: "West Sun" Trade GmbH, 20085 Hamburg (DE)
(72) Inventor: Arjang Meshin, Mohabatali, Tehran (IR)
(74) Representative: Cabinet Plasseraud

(57) **Abstract**

A method of and a device for filtering the intense dazzling light (IDL) generated by an electric welding apparatus fed by a periodic electric current (IW) during a welding operation.
The periodic electric current (IW) is detected (A) so as to generate a control signal (CS) of corresponding periodic profile and the scene of the welding operation is blanked (B) in synchronism with the periodic electric current thanks to the control signal (CS).
The intense dazzling light (IDL) is thus suppressed from viewing during the welding operation. Application to the welding industry.

## Description

The invention relates to a method and a device for filtering the intense dazzling light generated by an electric welding apparatus.

Common electric welding apparatuses are known to generate an intense dazzling light in operation, which is prone to disturb a human welder, unless adequate remedies are introduced.

According to well known current rules for welding operation, the light intensity must be strongly reduced.

To this end, some darkening filters provided with dark or black glasses or even some color lenses are commonly used.

As an example, such darkening filters may be mounted on a helmet the welder must wear during welding operation.

Alternatively in advanced darkening filters, auto-darkening glasses may be used in this situation.

However, the welding scene is so dark to the welder during the welding operation that he is not in a position to see the actual welding point and the vicinity thereof.

Continuing to carry out the welding operation along the line of the junction to build up is most difficult for the welder, since he cannot clearly see the welding point and its vicinity thereof.

Furthermore, the bigger are the electrodes in use and the higher is the electric current intensity to perform the welding, the higher intense and dazzling is the generated light.

Much stronger dark filters like filters number 10, 11 and 12 are thus used in such a situation, with the welder environment and viewing becoming darker.

Conducting a corresponding welding operation needs from the welder extreme skill to allow precise and reliable welding to be obtained.

Many other solutions are also known in the art, such as using a LCD glass sheet controlled by an electric intelligent circuit, so as to provide adequate viewing possibility to an operating welder who can first start easily by using an automatic system allowing the operating welder to put aside an output filter and then to continue the welding operation in auto-darkening process. The welding point and its vicinity can thus be seen easily at first from the back side. The intense dazzling light is generated whatsoever with high speed and transformed to a control signal adapted to control the LCD glass sheet so as to darken it sufficiently for the intense dazzling light to be prevented to pass through. While the darkened filter reduces the intense dazzling light, then the operating welder can see the scene of the welding operation better and thus continue his job.
Whenever the intense dazzling light interrupts, the control signal is retained and the LCD filter turns back to its first transmissive status.
An LCD glass sheet can also be associated with UV (Ultra Violet) and IR (Infra Red) filters so as to embody another kind of filter.

In the two last mentioned structures, however, a high darkness still remains all around the welding point and its vicinity during the welding operation.

An object of the present invention is to provide for a method and device for filtering the intense dazzling light generated by an electric welding apparatus, with the intense dazzling light being substantially fully suppressed so as to allow the welding point and its vicinity to be seen by the welder as if they were lighted under actual natural daylight.

Another object of the present invention is to provide a substantially easier way to use the welding electrodes by the welder, since the welding electrode tip, the welding point and its vicinity are thus seen under daylight, with the electrode being thus to be used as a pen, an exacto knife or a stylus operating much accurately.

Another object of the present invention is to provide for a method and a device for filtering the intense dazzling light generated by an electric welding apparatus that can be used whichever the diameter or thickness of the electrodes and/or the intensity of the electric current involved for performing the welding operation.

The method of filtering the intense dazzling light generated by an electric welding apparatus fed by a periodic electric current during a welding operation which is the subject of the invention includes detecting the periodic electric current so as to generate a control signal of corresponding periodic profile and blanking the scene of the welding operation in synchronism with the electric current thanks to the control signal.
It allows thus to suppress the intense dazzling light from viewing during the welding operation.

The device for filtering the intense dazzling light generated by an electric welding apparatus fed by a periodic electric current during a welding operation which is the subject of the invention includes at least a unit for detecting the electric current so as to generate a control signal of corresponding periodic profile and a unit for blanking the scene of the welding operation in synchronism with this electric current thanks to the control signal. It allows thus to suppress the intense dazzling light from viewing during the welding operation.

According to another aspect of the invention, the unit for detecting the electric current includes a sampling circuit adapted to sample the maximum and/or the minimum successive values of the electric current and a pulses generating circuit adapted to generate successive positive and/or negative pulses in synchronism with the maximum and/or the minimum successive values, with the successive positive and/or negative pulses forming the control signal.

According to a further aspect of the invention, the unit for blanking may include at least a blanking barrier provided with at least one opaque zone to the intense dazzling light and with one fully transparent zone to any visible wavelength, and a unit for inserting and withdrawing the opaque zone respectively withdrawing and inserting the fully transparent zone periodically in synchronism with the control signal, between the scene of the welding operation and a given point of observation of the welding operation.

According to another aspect of the invention, the blanking barrier is circular in shape, with the opaque zone to the intense dazzling light being formed from at least one sector of the circular blanking barrier and the fully transparent zone being formed from at least one complemented sector of the circular blanking barrier.

According to a further aspect of the invention, the unit for inserting and withdrawing the opaque zone respectively withdrawing and inserting the fully transparent zone periodically includes a rotating motor, with the circular blanking barrier being mounted and centred onto the drive shaft of the rotating motor, which is controlled thanks to the control signal so as to rotate by inserting and withdrawing the opaque zone respectively withdrawing and inserting the fully transparent zone periodically.

The method and device for filtering the intense dazzling light generated by an electric welding apparatus which are the object of the invention can be used to monitor welding operations thanks to welding apparatuses fed either with DC (rectified) or AC electric current.

The method which is the subject of the invention as well as the device allowing the implementation thereof, will be better understood, on reading the description and observing the drawings hereinafter in which
- Figure 1 a and 1b represent a schematic view of a welding operation conducted in the absence of any filter thanks to an electric welding apparatus fed by a periodic AC current, Figure 1a, and by a DC (rectified) current, Figure 1b ;
- Figure 1c and 1d represent a chronogram of the intense dazzling light in relation with the feeding electric current as shown in figure 1 a and 1 b respectively ;
- Figure 2a represents, purely by way of illustration, a spatiotemporal chart of the essential steps for implementing the method which is the subject of the invention ;
- Figures 2b and 2c represent purely by way of illustration, a particular physical embodiment of the method which is the subject of the invention for a welder observing a scene of welding operation;
- Figure 3a represents purely by way of illustration, an exploded view of a device for filtering the intensive dazzling light generated by an electric welding apparatus which is the subject of the present invention in accordance with a particular embodiment;
- Figures 3b and 3c represent purely by way of illustration, the mode of operation of the device shown at figure 3a, for a welder observing a welding operation as shown at figures 2b and 2c.
- Figure 3d represents purely by way of illustration, details of the electronic circuits which are mounted to embody the device of the present invention so as to control insertion and withdrawal of the blanking barrier to perform and its mode of operation in accordance with the method of the invention.

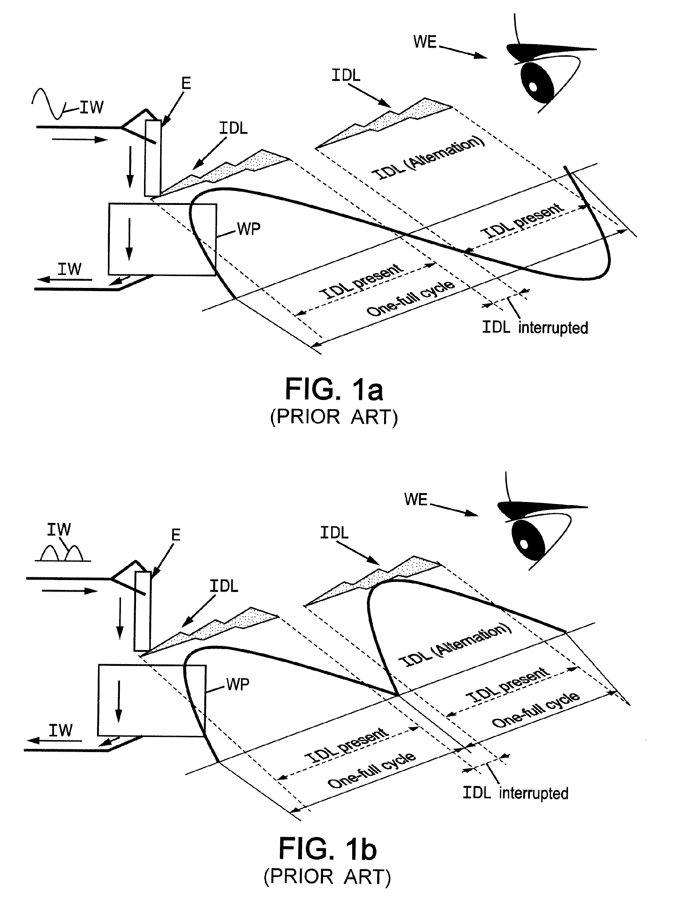

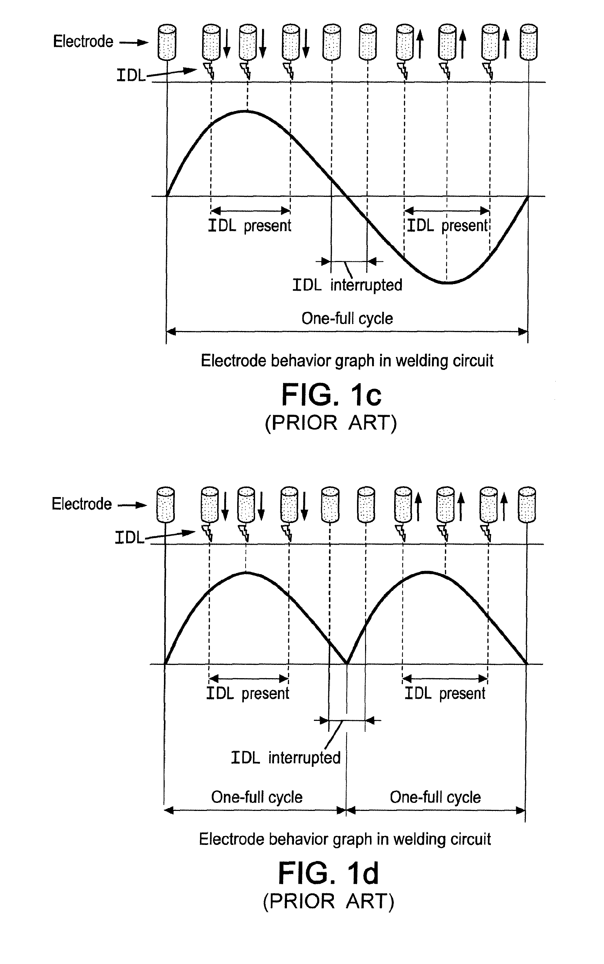

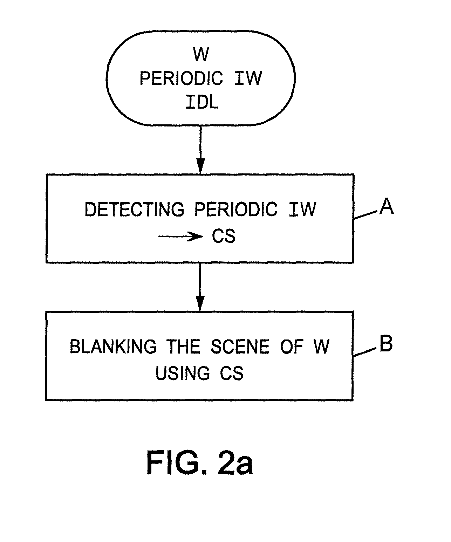

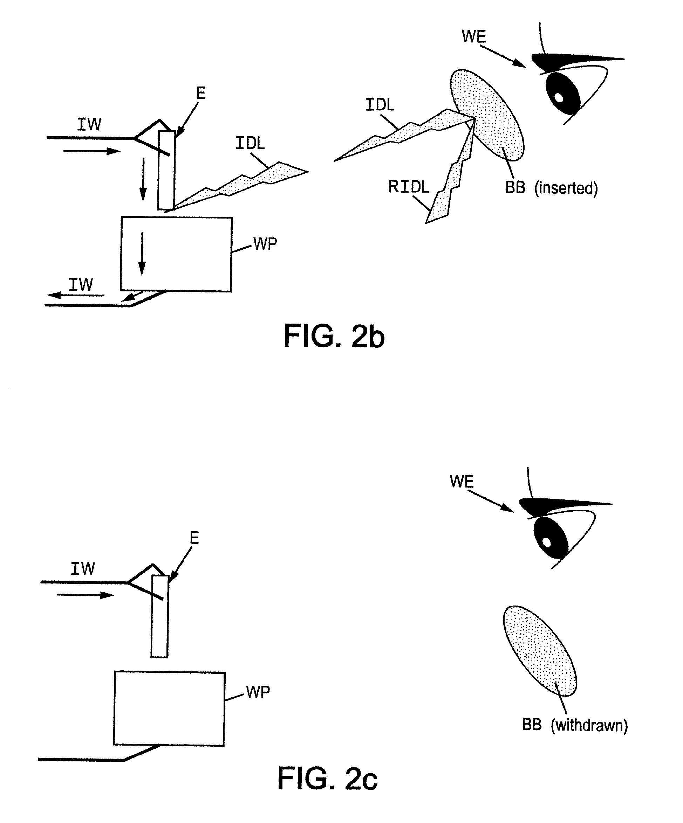

The method of filtering the intense dazzling light generated by an electric welding apparatus which is the subject of the present invention is now disclosed with reference to the flow chart shown at figure 2a and subsequent figures 2b and 2c. While figures 1 a to 1 d relate to a welding operation executed in accordance to the prior art, in which E designates a welding electrode and WP a workpiece undergoing the welding operation, IDL successive intense dazzling light bursts and WE the welder's eyes, like reference numbers designate like parts within subsequent figures 2a to 3d.

With reference to figure 2a, we consider first a welding operation denoted W which is conducted thanks to an electric welding apparatus fed by a periodic electric current, the intensity of which is denoted IW in operation.

This welding operation is represented as shown at Figure 1a to 1d relating to the prior art, with the periodic electric current corresponding either to an alternative current AC as shown on figures 1a and 1c or a DC current with corresponding alternations being rectified as shown at figure 1b and 1d.

The intense dazzling light denoted IDL is generated in accordance with the mode of operation of the welding apparatus, particularly as shown at figures 1 a to 1 d. The IDL is of moon color and very intense, so it cannot be seen without a mask. Its light intensity is stronger than IR and UV light so it can damage eyes easily.

As shown in details at these figures, the IDL is generated during a time duration of each periodic electric current alternation and interrupted otherwise, the time internal during which the IDL is generated being substantially centered onto the apex of its corresponding alternation, either positive or negative. The periodic electric current IW and IDL bursts are thus in a full phase relationship.

According to the method of filtering this intense dazzling light and with reference to figure 2a, this method includes at least a step A consisting in detecting the periodic current IW so as to generate a control signal of corresponding periodic profile. This control signal is denoted CS at step A on figure 2a.

Step A is thus followed by subsequent step B consisting in blanking the scene of the welding operation W in synchronism with the electric current IW thanks to the control signal CS.

Blanking the scene of the welding operation in synchronism with the electric current allows thus to suppress the intense dazzling light IDL from viewing the welding operation W.

Suppression of the intense dazzling light IDL from viewing takes place thanks to the retina persistence of any observer, particularly the welder, who can see the whole scene of welding in the absence of any intense dazzling light IDL during the IDL interruption, the viewer being thus in a position to see the corresponding image of the scene of welding in natural colour of daylight.

A particular physical embodiment of the method which is the subject of the invention is now illustrated and disclosed with reference to Figure 2b and figure 2c for a welder observing a scene of welding operation in accordance with the method of the invention.

Generally speaking as shown at figures 2b and 2c, the blanking operation includes alternatively inserting and withdrawing a blanking barrier, denoted BB, periodically in synchronism with the control signal CS between the scene of the welding operation and a given point of observation of the welding operation W.

The point of observation of the welding operation is represented by the welder's eye WE, the welder being thus conducting the welding operation and particularly controlling the mode of operation of the welding apparatus and the adequate displacement of the welding electrode E along the work piece WP where appropriate.

With reference to figure 2b, the blanking barrier BB is represented as inserted between the scene of the welding operation and the given point of observation of this welding operation, represented by the welder's eye WE.

With reference to figure 1c or 1d, the blanking barrier BB is thus maintained there between, while the IDL intense dazzling light is present.

Conversely, as shown at figure 2c, the blanking barrier BB is withdrawn from the line of sight between the welder's eye WE and the scene of the welding operation while the intense dazzling light IDL is interrupted.

In a general sense, the blanking barrier BB can be made of opaque material to the intense dazzling light IDL, while the intense dazzling light is generated, and fully transparent to any visible wavelength otherwise.

More particularly speaking the blanking barrier BB may be made of black body to the intense dazzling light a blackbody being known as to consist of a full radiator material which absorbs completely all incident radiation whatever the wavelength, the direction of incidence, or the polarization.

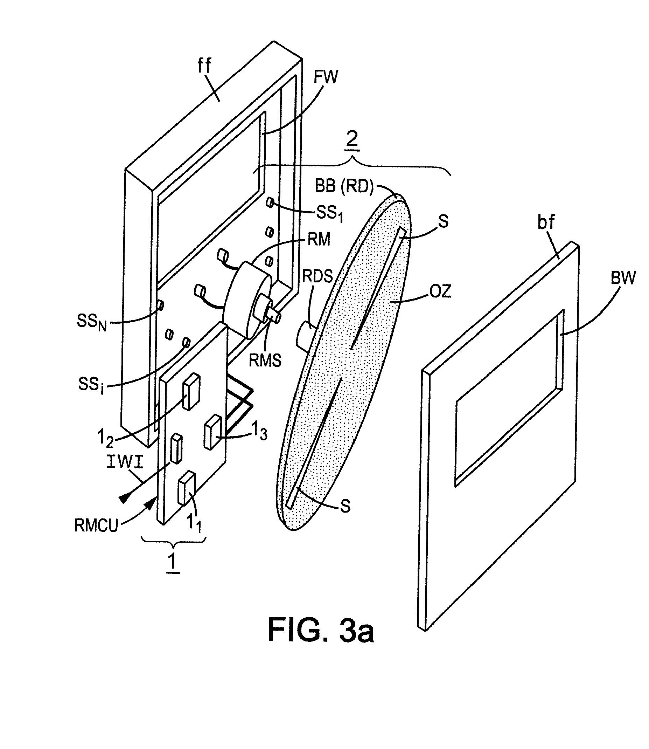

A device for filtering the IDL intense dazzling light generated by an electric welding apparatus fed by a periodic electric current during welding operation which is the subject of the invention is now disclosed with reference to figure 3a and subsequent ones.

As shown at figure 3a, the device in accordance with the subject of the invention includes a unit denoted 1 for detecting the periodic electric current IW so as to generate a control signal of corresponding periodic profile.

It also includes a unit denoted 2 for blanking the scene of the welding operation in synchronism with the electric current IW thanks to the control signal CS to thus allow to suppress the intense dazzling light IDL from viewing during the welding operation.

Generally speaking, in accordance with a preferred embodiment of a device of the invention as shown at figure 3a, the unit 1 for detecting the electric current and the unit 2 for blanking the scene of the welding operation in synchronism with the electric current are mounted between a device forward face denoted ff and a device backward face denoted bf, with corresponding units 1 and 2 being inserted within a box formed by the forward face ff and backward face bf, joined together.

The device forward face ff is provided with a forward window FW while the device backward face bf is provided with a backward window BW. The forward window FW and backward window BW are located in front of each other so as to allow, once the box including the unit 1 and unit 2 is built up, any observer and particularly the welder to observe the scene of the welding operation through the forward FW and the backward BW windows, while the blanking barrier BB is inserted and withdrawn during operation as it will be explained in more details later in the specification.

In order to generate the control signal CS of corresponding periodic profile to the periodic profile of the electric current feeding the welding apparatus, the unit 1 may, as an example, receive an external signal representing an image of the periodic electric current, this image being denoted IWI and being delivered as an example by the electric welding apparatus.

Alternatively, the unit 1 for detecting the electric current may also embody a particular sensor denoted 1₁ which is fully adapted to detect the intense dazzling light IDL since, as already mentioned beforehand within the specification, the intensive dazzling light IDL transmission and spread out all over the welding point environment and the periodic electric current IW feeding the welding apparatus and the image IWI thereof are in a full phase relationship.

When an intense dazzling light IDL sensor 1₁ is present and embodied within unit 1 for detecting the electric current, the input port delivering the image signal of the periodic electric current IWI is no more necessary and can be thus cancelled. The device for filtering the intense dazzling light of the invention being thus fully physically independent of the welding apparatus.

In order to generate the control signal CS, the unit 1 for detecting the electric current is also provided with a sampling unit denoted 1₂ which is adapted to sample the maximum and/or the minimum successive values of the electric current and particularly of the image signal of the periodic electric current IWI or of the signal delivered by the IDL sensor 1₁. The unit 1 for detecting the electric current is also provided with a pulse generating unit 1₃ which is adapted to generate successive positive and/or negative pulses in synchronism with the maximum and/or minimum successive values which are detected by the sampling circuit 1₂.

The successive positive and/or negative pulses can thus form the control signal CS which is used to insert and withdraw respectively the blanking barrier BB between the scene of the welding operation and the welder's eye WE, or, in other words with reference to figure 3a, between the forward window FW and the backward window BW embodying the device which is the subject of the invention.

In a general sense, it should be understood that the sampling circuit 1₂ clearly delivers maximum values only in case the welding apparatus is fed by DC (rectified) current as show at figure 1d while it delivers maximum and minimum values of the periodic electric current in case the same welding apparatus is fed by AC current, as shown at figure 1c as an example.

The way of implementing the pulses generating circuit 13 according to the two previously mentioned cases will not be disclosed in details, since embodying pulses circuits adapted to generate such positive and/or negative pulses is known to any person of ordinary skill in the corresponding art.

The construction of the second unit 2 for blanking the scene of the welding operation in synchronism with the electric current is now disclosed with reference to figure 3a.

As shown at figure 3a, the unit 2 for blanking, according to a preferred embodiment of the invention, includes a blanking barrier referred to as BB (RD) provided with at least one opaque zone to the IDL denoted OZ and with at least one fully transparent zone to any visible wavelength, which is denoted S.

The blanking unit 2 is further provided with a unit for inserting and withdrawing the opaque zone OZ respectively withdrawing and inserting the fully transparent zone S periodically in synchronism with the control signal CS, between the scene of the welding operation and a given point of observation of this welding operation.

The unit for inserting and withdrawing the opaque zone OZ respectively withdrawing and inserting the fully transparent zones periodically is denoted RM at figure 3a. It should be thus understood that thanks to the unit RM for inserting and withdrawing the opaque zone OZ respectively withdrawing and inserting the fully transparent zone S periodically, these zones are clearly inserted and withdrawn respectively within the forward window FW and the backward window BW embodying the device for filtering the intense dazzling light of the invention.

As clearly shown at figure 3a, and according to a preferred embodiment of the device of the invention, the blanking barrier BB (RD) is circular in shape and shown as a disc and the opaque zone to the intense dazzling light IDL is formed from at least one sector of the circular blanking barrier BB.

Conversely, the fully transparent zone is formed from at least one complemented sector of the circular blanking barrier BB and can generally be made of a slit S which forms at least one opening forming a complemented sector of the circular blanking barrier BB.

As shown at figure 3a, the unit RM for inserting and withdrawing the opaque zone OZ respectively withdrawing and inserting the fully transparent zone S periodically is formed by a rotating motor.

As show also at figure 3a, the circular disk embodying the blanking barrier BB (RD) is thus mounted and centred onto the drive shaft denoted RMS or the rotating motor RM thanks to a rotating disk shaft denoted RDS.

Controlling the rotating motor RM thanks to the control signal CS, allows thus to rotate by inserting and withdrawing the opaque zone OZ respectively withdrawing and inserting the fully transparent zone slit S periodically between the forward window FW and backward window BW.

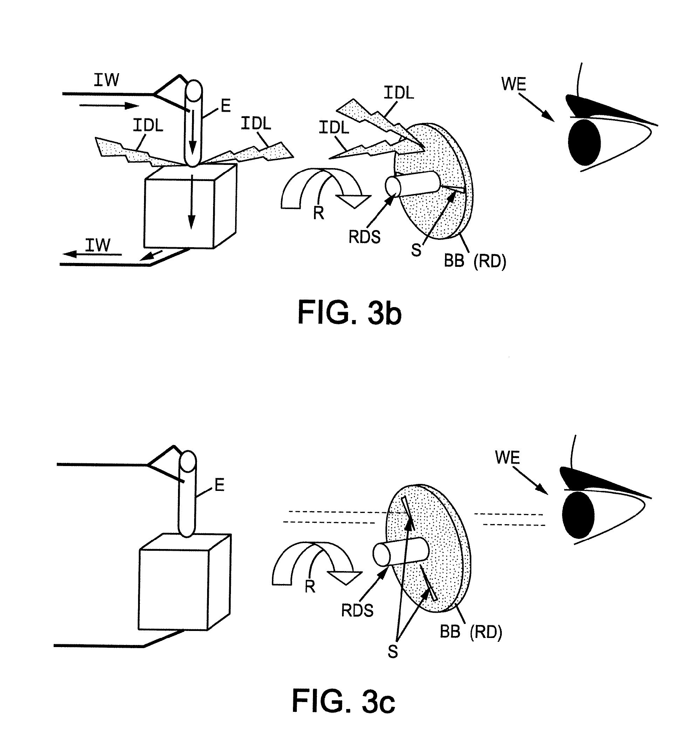

The mode of operation of the device which is the subject of the invention is disclosed with reference to figures 3b and 3c in which the position of the blanking barrier BB (RD) is shown to block any intense dazzling light IDL to the welder's eye WE as shown at figure 2b and figure 3b, while the blanking barrier BB (RD) is otherwise shown to allow the welder's eye WE to see the scene of welding through the slit S in accordance with figure 2c as shown at figure 3c.

In order to allow the blanking barrier BB (RD) to be fully operated in synchronism with the control signal CS a set of sensors, each denoted SS₁,...SS_{¡},...SSₙ, are shown located at the internal face of the forward face ff of the device of the invention.

These sensors are distributed onto the internal face of the forward face ff embodying the box forming the device of the invention and preferably arranged onto a circumferential line which is centred onto the axis of the rotating motor shaft RMS and thus of the rotating disk forming the blanking barrier BB, so as to allow to detect one of the slits S in position while the disk is rotating.

It should be understood that the device of the invention as shown at figure 3a can be mounted on a welder helmet with the forward face ff and the forward window FW being directed outside the helmet and the backward face BF and the backward window BW being directed towards the welder's eye WE.

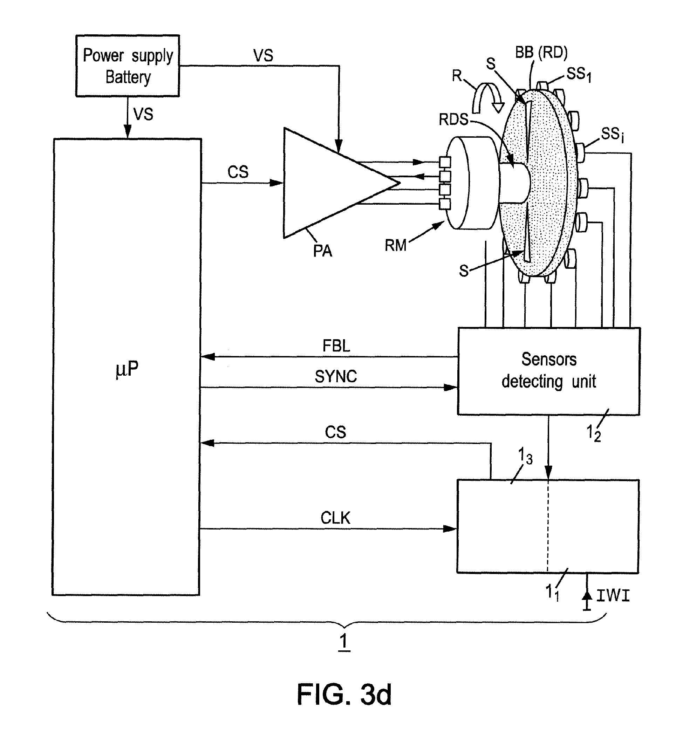

When the welder wears the helmet, while the welding apparatus is at rest, i.e. in the absence of any transmission and spread out of intense dazzling light IDL, the slits S of the rotating disk RD can be set in a position so as to allow the welder to see the whole welding operation. Such a position may correspond to the slits S being aligned with the horizontal position and particularly with the widest dimension of the forward window FW and the backward window BW, so as to allow the welder to see the whole scene with his two eyes. Once any intense dazzling light is transmitted and spread overall the welding point and environment, the rotating motor RM and the rotating disk RD and corresponding blanking barrier commence to rotate so as to perform the method of the invention. Rotation of the blanking barrier BB (RD) is denoted R and represented as a curved arrow at Figures 3b, 3c and 3d.

It should be understood that either the position of the slits S and the angular velocity of the rotating disk and the blanking barrier BB (RD) are fully controlled thanks to the unit 1 for detecting the periodic electric current and the unit 2 for blanking the scene of the welding operation.

A preferred embodiment of the electronic circuit specially embodied so as to control the blanking barrier BB (RD) in accordance with a method of filtering the intense dazzling light generated by an electric welding apparatus which is the subject of the present invention is now disclosed with reference to figure 3d.

As shown at figure 3d, the device of the invention is provided with a microprocessor denoted µP which is fed by a power supply battery adapted to furnish corresponding electric power, particularly voltage alimentation VS.

More particularly, a power amplifier PA is provided which receives the control signal CS delivered by the microprocessor µP so as to generate a power control signal which is directly fed to the rotating motor RM.

In the preferred embodiment of the device of the invention as shown at figure 3d, the rotating motor is preferably a DC motor which is fully adapted to rotate the blanking barrier BB (RD). DC motors are known to support good performances with respect to angular position of their rotating shaft and are generally used to perform accurate positioning of mechanical parts or even of robotic elements.

As also shown at figure 3d, each of the sensors SSᵢ are connected to a sensors detecting circuit embodying the sensor detecting circuit 1₂ as shown at figure 3a.

The sensors detecting circuit 1₂ is synchronized thanks to the microprocessor µP thanks to a SYNC signal and thus back connected thanks to a feedback loop FBL to the microprocessor µP.

Pulses generation circuit 1₃ receives a clock signal from the microprocessor µP and delivers the control signal CS to the microprocessor µP under control of the sensors detecting circuit 1₂.

Those who are skilled in the art of controlling rotation R of the rotating motor RN with respect to the slits S position having regard to each of the sensors SSᵢ will clearly understand that the SYNC signal refers to the rotation of the blanking barrier BB with reference to the slit position with respect to the sensors and particularly to a couple of sensors, while the clock signal CLK delivered by the microprocessor to the pulse generating circuit 1₃ generating the control signal CS clearly refers to the actual frequency of the periodic electric current feeding the welding apparatus.

Consequently the rotation movement R of the blanking barrier (RD) and corresponding slits S can be slaved to the frequency and angular rotation of the periodic electric current thanks to the feedback loop FBL according to known techniques for control which are fully known in the corresponding art and which will not be disclosed in more details. As an example, slaving the rotation movement R and corresponding slits S may be based on the difference of position and angular velocity of the detected slits with respect to the angular velocity and generation/interruption of the intense dazzling light IDL.

Rotation movement R and thus filtering of the IDL generated by a welding apparatus in accordance with the method of the invention as disclosed with reference to figure 2a and subsequent ones can be executed by the instructions of a program run by the microprocessor µP or by a given calculating unit.

## Claims

1. A method of filtering the intense dazzling light generated by an electric welding apparatus fed by a periodic electric current during a welding operation, said method including:
- detecting said periodic electric current so as to generate a control signal of corresponding periodic profile;
- blanking the scene of said welding operation in synchronism with said periodic electric current thanks to said control signal, so as to suppress said intense dazzling light from viewing during said welding operation.

2. The method of claim 1, wherein said blanking includes alternatively inserting and withdrawing a blanking barrier periodically in synchronism with said control signal between said scene of said welding operation and a given point of observation of said welding operation.

3. The method of claim 2, wherein said blanking barrier is opaque to said intense dazzling light while said intense dazzling light is generated and fully transparent to any visible wavelength otherwise.

4. A device for filtering the intense dazzling light generated by an electric welding apparatus fed by a periodic electric current during a welding operation, said device including:
- means for detecting said electric current so as to generate a control signal of corresponding periodic profile;
- means for blanking the scene of said welding operation in synchronism with said electric current thanks to said control signal, so as to suppress said intense dazzling light from viewing during said welding operation.

5. The device of claim 4, wherein said means for detecting said electric current include:
- sampling means adapted to sample the maximum and/or the minimum successive values of said electric current; and
- pulses generating means adapted to generate successive positive and/or negative pulses in synchronism with said maximum and/or minimum successive values, said successive positive and/or negative pulses forming said control signal.

6. The device of claim 4 or 5, wherein said means for blanking include at least:
- a blanking barrier provided with at least one opaque zone to said intense dazzling light and with one fully transparent zone to any visible wavelength;
- means for inserting and withdrawing said opaque zone respectively withdrawing and inserting said fully transparent zone periodically in synchronism with said control signal between said scene of said welding operation and a given point of observation of said welding operation.

7. The device of claim 6, wherein said blanking barrier is circular in shape, said opaque zone to said intense dazzling light being formed from at least one sector of said circular blanking barrier and said fully transparent zone being formed from at least one complemented sector of said circular blanking barrier.

8. The device of claims 6 and 7, wherein said means for inserting and withdrawing said opaque zone respectively withdrawing and inserting said fully transparent zone periodically include a rotating motor, said circular blanking barrier being mounted and centered onto the drive shaft of said rotating motor, said rotating motor being controlled thanks to said control signal so as to rotate by inserting and withdrawing said opaque zone respectively withdrawing and inserting said fully transparent zone periodically.

9. A program stored on a memory unit and including successive instructions which can be run by the microprocessor of a calculating unit, wherein said program is adapted to execute filtering of the intense dazzling light generated by an electric welding apparatus fed by a periodic electric current during a welding operation in accordance with the method as claimed by claims 1 to 3.
